# EUROPEAN PATENT APPLICATION

(11) **EP 2 793 120 A1**
(43) Date of publication of application: **22.10.2014**
(21) Application number: 14163999.7
(22) Date of filing: 09.04.2014
(51) Int. Cl.: G06F 3/0488

(54) **Display device and display control program**

(30) Priority: 17.04.2013 JP 2013086918
(71) Applicant: Fujitsu Limited, Kawasaki-shi, Kanagawa 211-8588 (JP)
(72) Inventor: Joe, Hideaki, Kawasaki-shi, Kanagawa 211-8588 (JP); Tsumura, Ryuuta, Kawasaki-shi, Kanagawa 211-8588 (JP); Akama, Katsuaki, Kawasaki-shi, Kanagawa 211-8588 (JP)
(74) Representative: Wilding, Frances Ward

(57) **Abstract**

A display device includes a display unit, an input device, an assignment unit, a detection unit, and a transposition unit. The display unit includes a screen. The input device accepts an input from a user. The assignment unit assigns part of the input device to a detection area in which a request to change the display position of an image on the screen is detected. The detection unit detects an input from the detection area. If the input from the detection area is detected when a first image including a target area which may be selected as a target to be processed by the user is displayed on the screen, the transposition unit displays a second image on the display unit. The second image is obtained by moving the display position of the first image so that the target area approaches the detection area.

## Description

### FIELD

The embodiments discussed herein are related to electronic equipment having a display function.

### BACKGROUND

Recently, various types of mobile electronic equipment having a display function such as a mobile telephone terminal, a tablet, etc. have become widespread. In an application used in a mobile telephone terminal, an operator such as an icon, which is used for important operations including the termination of an application and the like, is often set at the upper part on the screen to avoid an erroneous operation. However, when a user operates mobile electronic equipment one-handed, the operator used in an important operation is displayed in an area not easily accessible by the user. Furthermore, the larger the screen is, the farther the display position of the operator used in an important operation is located from the position of the hand of the user. Therefore, the larger the screen of the equipment is, the more difficult the operation becomes for the user.

To solve the problem, a mobile terminal which extracts an item which may be operated by a user from among the pieces of information displayed by a first display device on the screen is devised, the number corresponding to the extracted item is displayed using a second display device at an upper layer (for example, patent document 1). The mobile terminal accepts an operation input from a user on the area whose number is displayed by the second display device as an operation input for the item displayed by the first display device.

For example, see Japanese Laid-open Patent Publication No. 2010-160564 etc.

In a mobile terminal in which the number corresponding to the item which may be operated by a user is displayed by the second display device on the upper layer, the display of the number is overwritten with the display by the first display device. Since the second display device does not align the display position of the number corresponding to each item with the display position of each item on the first display device, the user is unable to easily find the display of the number corresponding to the item to be operated.

### SUMMARY

An aspect of an embodiment of the present invention aims at improving the operability of a display device.

The display device according to an embodiment of the present invention includes a display unit, an input device, an assignment unit, a detection unit, and a transposition unit. The display unit includes a screen. The input device accepts an input from a user. The assignment unit assigns part of the input device to a detection area in which a request to change the display position of an image on the screen is detected. The detection unit detects an input from the detection area. If the input from the detection area is detected when a first image including a target area which may be selected as a target to be processed by the user is displayed on the screen, the transposition unit displays a second image on the display unit. The second image is obtained by moving the display position of the first image so that the target area approaches the detection area.

### BRIEF DESCRIPTION OF DRAWINGS

FIGS. 1A and 1B are display examples of a display device according to an embodiment of the present invention;
FIG. 2 is a block diagram of an example of a display device;
FIG. 3 is an example of a hardware configuration of a display device;
FIG. 4 is an example of coordinates and an example of setting a display area;
FIGS. 5A and 5B are examples of a landscape orientation on the display device;
FIG. 6 is a flowchart of an example of the process performed by the display device;
FIG. 7 is a flowchart of an example of the process performed on slide display;
FIG. 8A is a flowchart of an example of the process performed by the display device;
FIG. 8B is a flowchart of an example of the process performed by the display device;
FIG. 9 is a block diagram of an example of a display device according to the second embodiment of the present invention;
FIGS. 10A through 10C are examples of the method of changing the size of a blank area;
FIG. 11 is an example of coordinates and an example of setting a display area;
FIGS. 12A through 12C are examples of the method of changing the size of a blank area;
FIG. 13A is a flowchart of an example of the process of changing the size of a blank area;
FIG. 13B is a flowchart of an example of the process of changing the size of a blank area;
FIG. 14 is a flowchart of an example of the process of changing the size of a blank area;
FIGS. 15A through 15D are explanatory views of examples of the processes performed according to the third embodiment of the present invention;
FIG. 16 is a flowchart of an example of the process performed according to the third embodiment; and
FIGS. 17A and 17B are variation examples of a display device.

### DESCRIPTION OF EMBODIMENTS

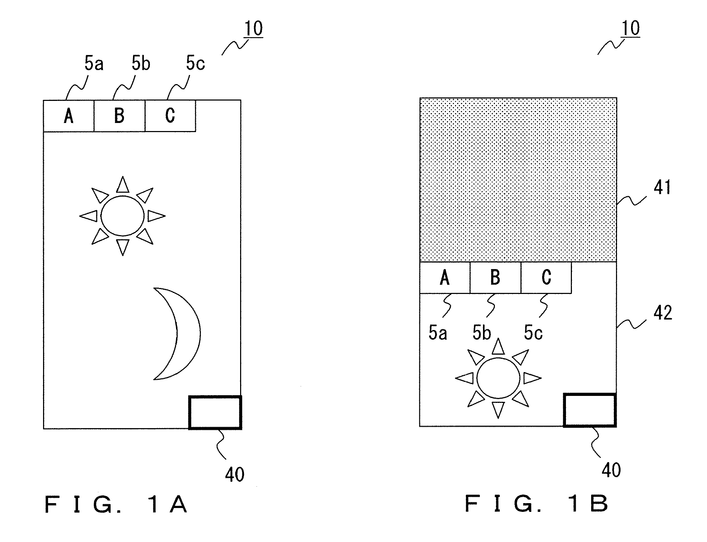

FIGS. 1A and 1B are display examples of a display device 10 according to an embodiment of the present invention. The display device 10 changes the display image on the screen depending on the operation of a user. It is assumed that the screen illustrated in FIG. 1A is displayed on the display device 10 by the process of a user. In the example in FIG. 1A, icons 5 (5a through 5c) which may be selected by a user are displayed on the screen relating to an application used in the uppermost layer.

The display device 10 selects part of the input device loaded into the display device 10, and assigns the selected area to a detection area 40 in which a request to change the display position of an image is detected. In this case, the input device loaded into the display device 10 is an arbitrary device to be used in inputting data to the display device 10 including a touch panel, a hard key, an external keyboard, etc. The area selected as part of an input device may be part of the loaded input device, and may be part of plural types of devices. For example, an area of part of a touch panel may be the detection area 40, and one of the hard keys may be the detection area 40 in addition to the area of part of the touch panel. In the example in FIG. 1A, it is assumed that the detection area 40 is an area of part of a touch panel.

When an input of a user from the detection area 40 is detected, the display device 10 judges that a change in a display position has been requested on the display of an application which is being operated in the uppermost layer. The display by an application being operated in the uppermost layer is described as a target image. Then, the display device 10 moves the display position of a target image in the direction of the detection area 40 by moving the origin of the coordinates being used while the target image is displayed, and displays part of the target image on the screen. For example, when the display device 10 detects an input from the detection area 40, it separates the screen into a blank area 41 and a display area 42 so that the target image may be displayed in the display area 42. FIG. 1B is a display example obtained when the display position of the target image is changed by displaying the target image in the display area 42. That is, the display device 10 changes the display position of the target image so that the display position of the icons 5a through 5c which may be selected by a user may approach the detection area 40.

That an input of a user is detected from the detection area 40 indicates that the hand of the user is located at a position from which an input may be provided for the detection area 40 when an input is provided for the detection area 40. Therefore, by the target image approaching the detection area 40 for display after the input from the detection area 40, an operator which has been displayed in an area where the hand of the user does not easily reach before the input to the detection area 40 may be provided to approach the position of the hand of the user. Therefore, the display device 10 may provide an environment in which a user may easily perform an operation. Furthermore, since the display position of the target image slides in the direction of the detection area 40, the relative position of an operator such as an icon, a button, etc. is not changed, but a user may easily find a target to be operated. For example, even if a user who tries to operate the icon 5a illustrated in FIG. 1A slides the target screen as illustrated in FIG. 1B, the order of the icons 5a through 5c displayed at the upper part of the target screen will not be changed. Therefore, the icon 5a may be easily found.

Furthermore, when an input is provided again from the detection area 40, the display device 10 returns the display position of the target image as illustrated in FIG. 1A. Therefore, the user may release the change in the display position by the operation in the detection area 40. Accordingly, the user may easily release the setting of a change in the display position when the display position is to be returned after performing the process using the operator.

### <Configuration of device>

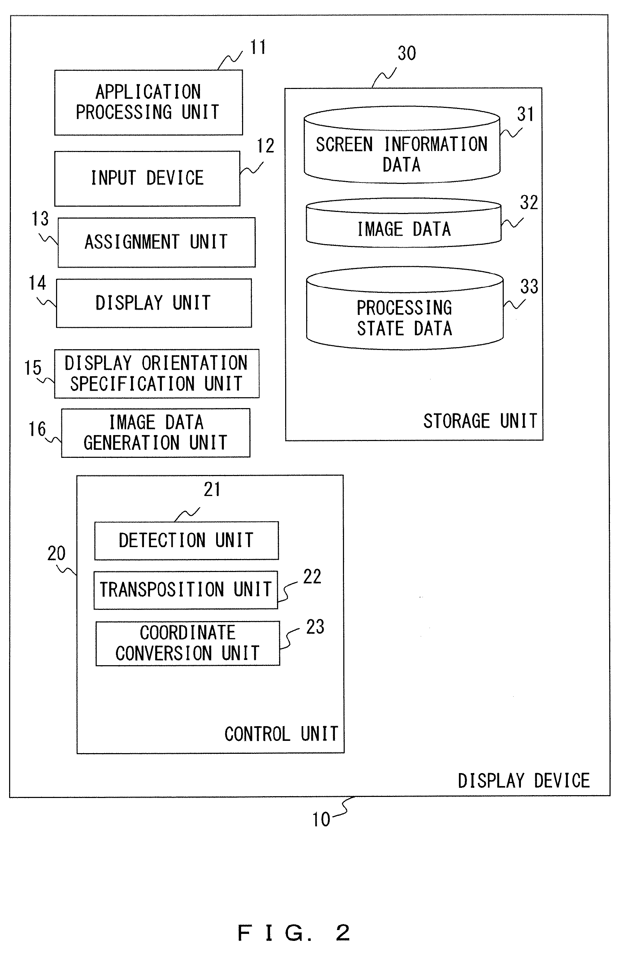

FIG. 2 is a block diagram of an example of the display device 10. The display device 10 includes an application processing unit 11, an input device 12, an assignment unit 13, a display unit 14, a display orientation specification unit 15, an image data generation unit 16, a control unit 20, and a storage unit 30. The control unit 20 includes a detection unit 21, a transposition unit 22, and a coordinate conversion unit 23. The storage unit 30 stores screen information data 31, image data 32, and processing state data 33.

The application processing unit 11 processes an application. When the application processing unit 11 processes a plurality of applications, the application processing unit 11 determines the application to be processed in the uppermost layer. The application processing unit 11 associates the identifier of an application with a management number in the order of activation. The management number is a serial number, and the application processing unit 11 judges that the application having the largest management number is being processed in the uppermost layer. The information about the association between the application identifier and the management number is stored in the storage unit 30 as the processing state data 33.

The input device 12 accepts an input from a user, and outputs input coordinates to the application processing unit 11, the detection unit 21, etc. The input device 12 is an arbitrary device available for an input to the display device 10, for example a touch panel, a hard key, an external keyboard, etc. The assignment unit 13 assigns part of the input device 12 to the detection area 40. For example, the assignment unit 13 is set to the same coordinate system as the screen, and may assign to the detection area 40 part of the touch panel used in detecting the input position to the screen. In addition, the assignment unit 13 sets all or a part of the hard key provided for the display device 10 as the detection area 40. The assignment unit 13 notifies the detection unit 21 of the area, device, etc. assigned to the detection area 40.

The display unit 14 includes a screen, and displays an image on the screen so that a user may visually recognize the image. The display orientation specification unit 15 specifies the orientation of the display on the screen. For example, if the width side is a shorter side and the height side is a longer side on the rectangular screen, the display orientation specification unit 15 judges that the screen is being used in the portrait orientation. On the other hand, if the height side is a shorter side and the width side is a longer side on the rectangular screen, the display orientation specification unit 15 judges that the screen is being used in the landscape orientation. The image data generation unit 16 generates image data displayed on the screen depending on the process by the application processing unit 11, and stores the data as the image data 32 in the storage unit 30.

The detection unit 21 detects an input to the detection area 40 from a user. The detection unit 21 judges whether or not the coordinates reported by the input device 12 and the input confirmed key are included in the detection area 40. If the input coordinates and the input confirmed key are included in the detection area 40, the detection unit 21 notifies the transposition unit 22 that an input to the detection area 40 has been provided. It is assumed that the transposition unit 22 reads the setting information about a blank area 41 and a display area 42 from the screen information data 31 in advance. Depending on the notification from the detection unit 21, the transposition unit 22 requests that the display unit 14 display the target image in the area of the display area 42 with the upper left corner of the target image aligned to the upper left corner of the display area 42. The transposition unit 22 also requests that the display unit 14 display the predetermined display in the blank area 41. The image displayed in the blank area 41 may be a monochrome image in black or white, or a clock screen, a message screen, a user selected image, etc. Thus, at a request from the transposition unit 22, the display position of the target image is slid in the direction of the detection area 40 on the display. Hereafter, the display of the display position of the target image slid in the direction of the detection area 40 may be described as a slide display. Furthermore, during the slide display, the transposition unit 22 requests that the input device 12 stop notifying the application processing unit 11 of the input coordinates. Accordingly, during the slide display, the input device 12 outputs the input coordinates to the detection unit 21.

When an input is detected in the input device 12 during the slide display, the coordinate conversion unit 23 converts the coordinates of the input position into the coordinates of the target image, and notifies the application processing unit 11 of the coordinates obtained by the conversion. The application processing unit 11 specifies an operator as a target of input according to the coordinates input from the coordinate conversion unit 23. The screen information data 31 is the information about the coordinates set on the screen provided for the display device 10. Furthermore, it is also assumed that the screen information data 31 also includes the information about the setting range of the blank area 41 and the display area 42. The image data 32 includes the target image, the image displayed in the blank area 41, and the like.

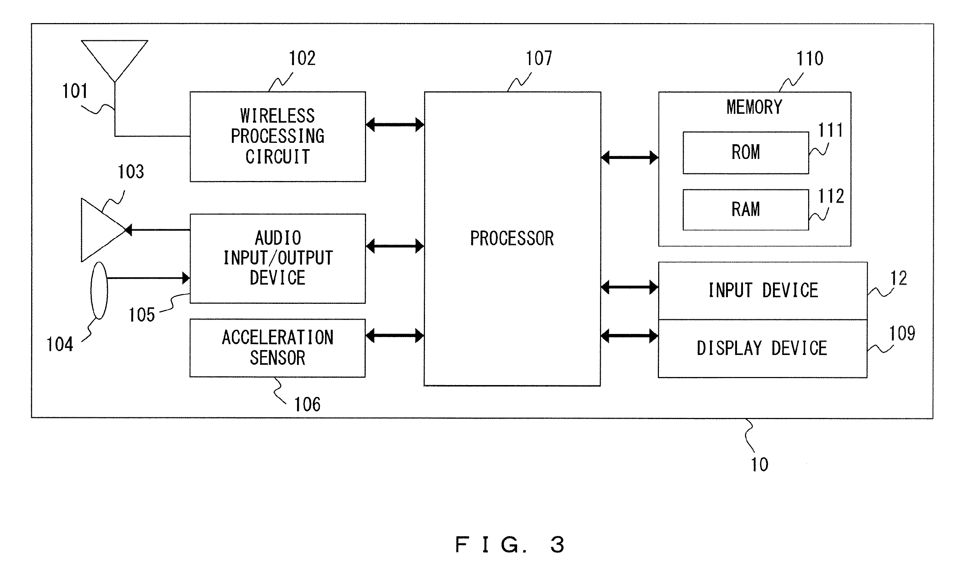

FIG. 3 is an example of a hardware configuration of the display device 10. It is assumed that the display device 10 includes an acceleration sensor 106, a processor 107, an input device 12, a display device 109, and memory 110. It is assumed that the memory 110 includes read only memory (ROM) 111 and random access memory (RAM) 112. Furthermore, the display device 10 may optionally includes an antenna 101, a wireless processing circuit 102, a speaker 103, a mike 104, and an audio input/output device 105 . When the display device 10 is provided with the speaker 103 and the mike 104, the display device 10 may be a mobile telephone terminal.

The processor 107 operates as the application processing unit 11, the assignment unit 13, the image data generation unit 16, and the control unit 20. The ROM 111 may store a program and data used to operate the display device 10. The RAM 112 stores the screen information data screen information data 31, the image data 32, and the processing state data 33. Furthermore, the RAM 112 may also store the data obtained by the process of the processor 107 and the data received through the antenna 101. The display orientation specification unit 15 is realized by the acceleration sensor 106 and the processor 107. The input device 12 is a hard key used in selecting an icon displayed on the screen, a touch panel provided superposed on the liquid crystal display, etc. The input device 12 recognizes an input by a key and specifies the input position to a touch panel. The display device 109 is a display such as a liquid crystal display etc., and operates as the display unit 14. The wireless processing circuit 102 communicates data with a base station through the antenna 101. The audio input/output device 105 controls an input of voice from the mike 104, and an output of audio data to the speaker 103.

### <First embodiment>

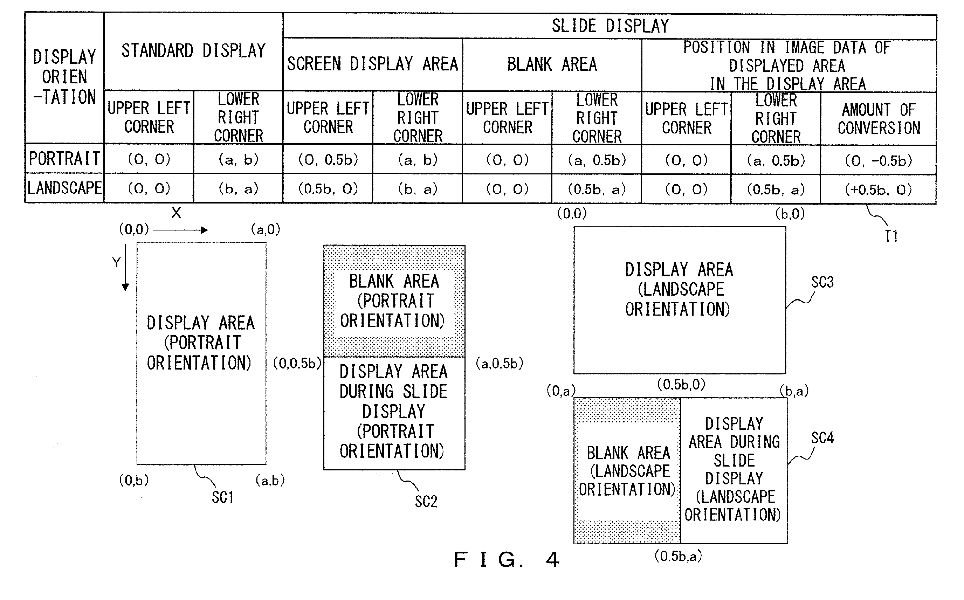

The process performed by the display device 10 is described below using as an example the case in which the blank area 41 and the display area 42 are set as T1 in FIG. 4. Assume that the information illustrated by T1 in FIG. 4 is stored in advance as the screen information data 31. On the screen and the touch panel, as illustrated by SC1 in FIG. 4, the upper left corner of the screen is defined as the origin, the X axis is set as being rightward from the origin, and the Y axis is set as being downward from the origin. On the screen, it is assumed that the length of the shorter side is a, and the length of the longer side is b. Therefore, when the screen is in the portrait orientation, as illustrated by SC1, the coordinates of the upper left corner are (0 , 0), and the coordinates of the lower right corner are (a, b). On the other hand, when the screen is in the landscape orientation, as illustrated by SC3, the coordinates of the upper left corner are (0, 0), and the coordinates of the lower right corner are (b, a).

In the first embodiment, the case in which the blank area 41 is equal in size to the display area 42 is described as an example. When the detection area 40 is set at the lower part of the screen in the portrait orientation, as illustrated by SC2, the blank area 41 occupies the upper half of the screen, and the display area 42 occupies the lower half of the screen. Therefore, as illustrated by T1 in FIG. 4, the coordinates of the upper left corner of the display area 42 are (0, 0.5b), and the coordinates of the lower right corner are (a, b). The coordinates of the upper left corner of the blank area 41 are (0, 0), and the coordinates of the lower right corner are (a, 0.5b).

On the other hand, when the detection area 40 is set on the right of the screen in the landscape orientation, as illustrated by SC4, the blank area 41 occupies the left half of the screen, and display area 42 occupies the right half of the screen. Therefore, as illustrated by T1 in FIG. 4, the coordinates of the upper left corner of the display area 42 are (0.5b, 0), the coordinates of the lower right corner are (b, a), the coordinates of the upper left corner of the blank area 41 are (0 , 0), and the coordinates of the lower right corner are (0.5b, a).

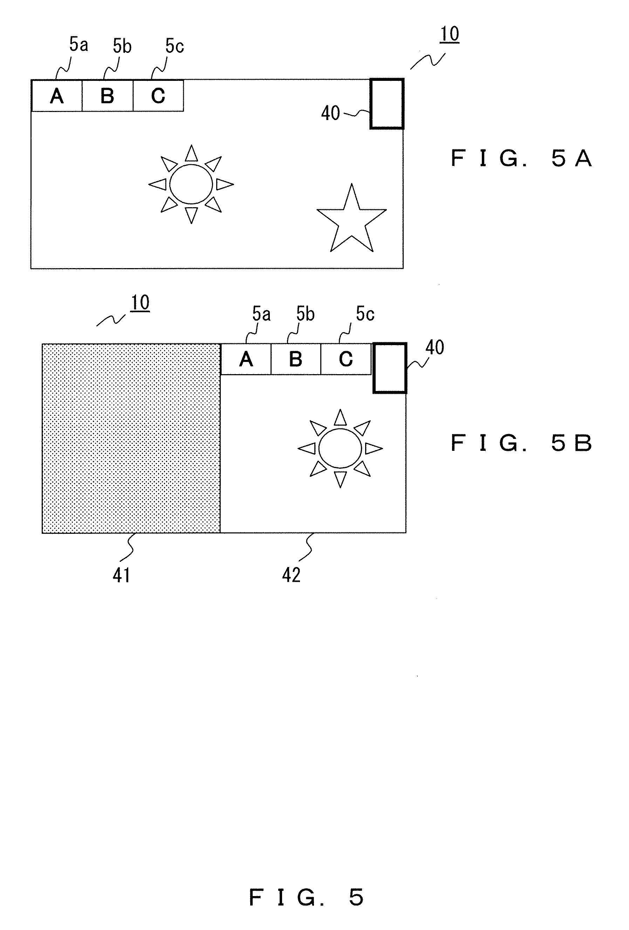

FIGS. 5A and 5B are examples of the landscape orientation on the display device. Described below is an example of the process performed when an input from the detection area 40 is detected in the landscape orientation on the display device.

The procedure P1 is described below. When the display device 10 is activated, the display orientation specification unit 15 specifies the orientation of the screen, and notifies the assignment unit 13, the transposition unit 22, and the image data generation unit 16 of the orientation. In this case, the screen is in the landscape orientation. The assignment unit 13 sets part of the input device 12 in the detection area 40. In this case, as illustrated in 5A, it is assumed that the area around the upper right corner of the screen is set in the detection area 40 in the touch panel loaded as the input device 12. When part of the touch panel is set in the detection area 40, the assignment unit 13 selects the area to be assigned to the detection area 40 from the area which is probably close to the hand of the user. For example, the assignment unit 13 sets the detection area 40 at the lower part on the screen if the notification from the display orientation specification unit 15 is performed in the portrait orientation, and sets the detection area 40 on the right on the screen if the notification is performed in the landscape orientation. The assignment unit 13 notifies the detection unit 21 of the coordinates assigned to the detection area 40 on the touch panel, and the detection unit 21 stores the coordinates for specification of the detection area 40. For example, assume that the detection unit 21 stores (0.9b, 0) as the coordinates of the upper left corner of the detection area 40, and (b, 0.25a) as the coordinates of the lower right corner.

The procedure P2 is described below. When a user activates an application AP1 after activation of the display device 10, the application processing unit 11 associates the identifier of the application AP1 with the management number Z=1 and stores them in the processing state data 33. Furthermore, the application processing unit 11 outputs the data used in displaying the screen by the application AP1 to the image data generation unit 16. The image data generation unit 16 generates an image to be displayed on the screen according to the information input from the application processing unit 11 and the display orientation specification unit 15. The image data generation unit 16 records the generated image as the image data 32 associated with the identifier of the application AP1. The display unit 14 displays the image data 32 on the screen.

The procedure P3 is described below. When a user activates an application AP2, the application processing unit 11 records in the processing state data 33 the identifier of the application AP2 associated with the management number Z=2. Furthermore, the application processing unit 11 outputs to the image data generation unit 16 the data used in displaying the screen by the application AP2. Since the display orientation specification unit 15, the image data generation unit 16, and the display unit 14 operate similarly to when the image relating to the application AP1 is displayed, the image relating to the application AP2 is displayed on the screen. It is assumed that the display screen by the application AP2 is illustrated in, for example, FIG. 5A.

The procedure P4 is described below. It is assumed that a user uses the display device 10 in the landscape orientation by holding the right side of the screen of the display device 10. Then, if the user tries to operate the icons 5a through 5c while displaying the screen relating to the application AP2, the user will have difficulty reaching the icons 5a through 5c because the hand of the user is placed around the detection area 40. Therefore, the user performs the operation of touching the detection area 40.

The procedure P5 is described below. The detection unit 21 acquires the coordinates of the input position detected by the input device 12, and judges whether or not the input position is included in the detection area 40. If it is judged that there has been an input to the detection area 40, the detection unit 21 notifies the transposition unit 22 that the input to the detection area 40 has been detected.

The procedure P6 is described below. The transposition unit 22 specifies the areas of the blank area 41 and the display area 42 depending on the orientation of the screen reported by the display orientation specification unit 15. Since the display orientation of the screen is the landscape orientation, the coordinates of the upper left corner of the display area 42 are (0.5b, 0) as illustrated by T1 and SC4 in FIG. 4. Then, the transposition unit 22 requests that the display unit 14 display the image inserted to shift the start-of-display position of the target image from the origin of the screen in the blank area 41, and display the origin of the target image as aligned to the upper left corner of the display area 42. Hereafter, the image to be inserted to shift the start-of-display position of the target image may be referred to as an "inserted image". Furthermore, the transposition unit 22 requests that the input device 12 output the information about the input position on the touch panel to the detection unit 21, not to the application processing unit 11.

The procedure P7 is described below. The display unit 14 changes the display at the request from the transposition unit 22. In this case, the display unit 14 displays an inserted image in the blank area 41. It is assumed that the inserted image is an arbitrary image including a monochrome image, an image including a clock and a message, a multicolor image including a pattern, etc. The display device 10 may hold an inserted image in the landscape orientation and an inserted image in the portrait orientation according to the blank area 41 for the landscape orientation and the blank area 41 for the portrait orientation. In the process of the display unit 14, the display of a screen is changed as illustrated in FIGS. 5A and 5B. That is, the display position of a target image is changed so that the display positions of the icons 5a through 5c as an area which may be selected by a user may approach the detection area 40.

The procedure P8 is described below. Concurrently with the change in display on the display unit 14, the transposition unit 22 notifies the coordinate conversion unit 23 of the coordinates of the upper left corner of the display area 42. Based on the information reported by the transposition unit 22, the coordinate conversion unit 23 specifies which part of the image data 32 of the target image corresponds to the area displayed in the display area 42. If slide display is performed in the landscape orientation, the origin (0, 0) of the target image is displayed as aligned to the coordinates (0.5b, 0) of the upper left corner of the display area 42. The coordinates of the lower right corner of the screen are (b, a). Therefore, the area displayed in the display area 42 has the upper left corner (0, 0) and the lower right corner (0.5b, a) in the target image. That is, when the slide display is performed in the landscape orientation, the left half of the target image is displayed at the right half of the screen. An example of the information about the position in the target image of the area displayed in the display area 42 is illustrated on the right of the table T1 in FIG. 4. Furthermore, the coordinate conversion unit 23 calculates the amount of conversion for conversion of the coordinates, whose input is observed, into an input position in the target image, and stores the calculated data. In this example, 0.5b is subtracted from the value of the X coordinate of the input coordinates, and the value of the Y coordinate is not changed, thereby obtaining the input position in the target image.

The procedure P9 is described below. Assume that a user selects the icon 5a during the slide display illustrated in FIG. 5B. The input device 12 acquires the coordinates of the input position on the touch panel. The input device 12 outputs the acquired coordinates to the detection unit 21. The detection unit 21 judges that the coordinates reported by the input device 12 are not included in the detection area 40. Then, the detection unit 21 outputs the coordinates input from the input device 12 to the transposition unit 22 and the coordinate conversion unit 23.

The transposition unit 22 judges whether or not the input coordinates are included in the blank area 41. In this case, since the input coordinates are not included in the blank area 41, the transposition unit 22 terminates the process.

The coordinate conversion unit 23 judges whether or not the input coordinates are included in the display area 42. In this case, since the input coordinates are included in the display area 42, the coordinate conversion unit 23 converts the coordinates reported by the input device 12 to the position in the target image, and outputs the obtained value to the application processing unit 11. For example, assume that the coordinates input from the input device 12 when the screen is displayed as illustrated in FIG. 5B are (0.55b, 0.05a). In this case, the coordinate conversion unit 23 calculates the input position as (0.05b, 0.05a) based on the origin of the target image, and outputs the result to the application processing unit 11.

The procedure P10 is described below. The application processing unit 11 performs a screen transition associated with the position input from the coordinate conversion unit 23. For example, when the icon 5a is associated with the display of the text input screen, the application processing unit 11 displays the input screen of text.

The procedure P11 is described below. If the coordinates input from the input device 12 are included in the blank area 41, the transposition unit 22 judges that the termination of the slide display has been requested. Then, the transposition unit 22 requests that the display unit 14 return the display position of the target image to the state before the slide display was performed. By the display unit 14 returning the display, the display is changed as illustrated in FIG. 5A from the state illustrated in FIG. 5B.

If the input position of the user is included in the detection area 40, the detection unit 21 notifies the transposition unit 22 that the detection area 40 has been accessed. The transposition unit 22 judges that the termination of the slide display has been requested also when the input to the detection area 40 is observed during the slide display. Then, the transposition unit 22 returns the display of the screen to the state before the slide display to request that the display unit 14 terminate the slide display. When the slide display is released, the input device 12 starts outputting the input coordinates to the application processing unit 11 and the detection unit 21.

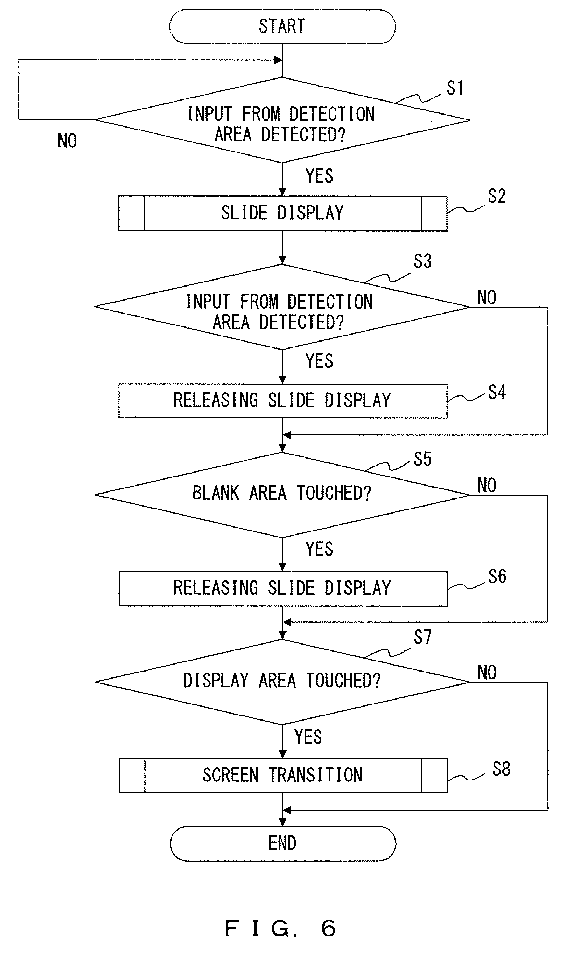

FIG. 6 is a flowchart of an example of the process performed by the display device 10. The detection unit 21 judges whether or not the input from the detection area 40 has been detected (step S1). The display device 10 waits until the input from the detection area 40 is detected (NO in step S1). If the input from the detection area 40 is detected, the transposition unit 22 requests that the display unit 14 perform the slide display, thereby performing the slide display (step S2 after YES in step S1). If the input from a user is detected, the detection unit 21 judges again whether or not the input to the detection area 40 has been observed (step S3). When the input to the detection area 40 is detected again, the transposition unit 22 requests that the display unit 14 release the slide display, and the display unit 14 returns the display of the screen to the state before the slide display at the request from the transposition unit 22 (step S4 after YES in step S3). Then, the transposition unit 22 judges whether or not the input to the blank area 41 has been detected (step S5). When the input to the blank area 41 is detected, the transposition unit 22 judges that the end of the slide display has been requested, and requests that the display unit 14 terminate the slide display (step S6 after YES in step S5). The coordinate conversion unit 23 judges whether or not the input to the display area 42 has been detected (step S7). When the input to the display area 42 is detected, the coordinate conversion unit 23 converts the input position to the coordinates on the target screen, and outputs the result to the application processing unit 11 (YES in step S7). The application processing unit 11 performs the screen transition depending on the coordinates reported by the coordinate conversion unit 23 (step S8). On the other hand, if the input coordinates are not included in the display area 42, the coordinate conversion unit 23 returns to the standby state (NO in step S7).

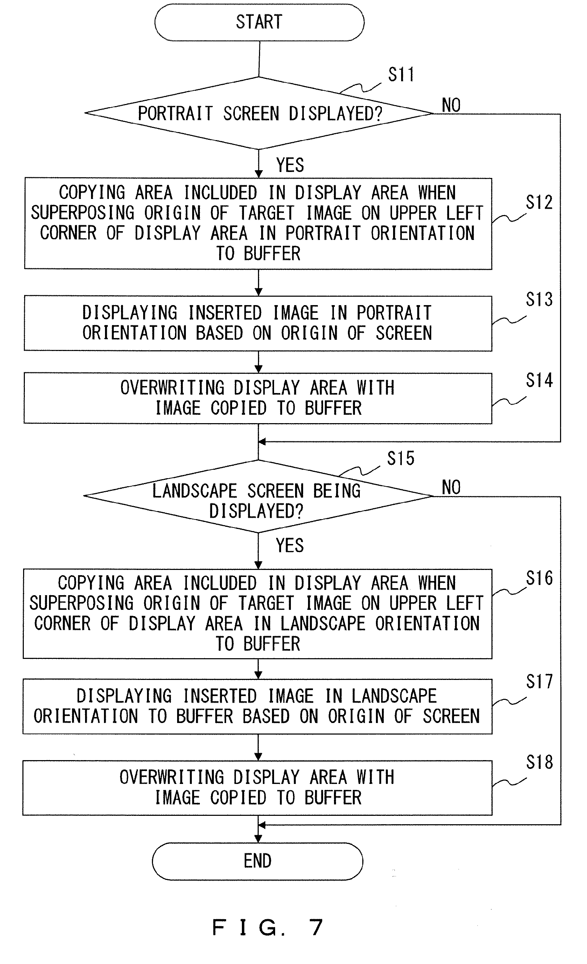

FIG. 7 is a flowchart of an example of the process performed on slide display. FIG. 7 illustrates in detail the process performed in step S2 in FIG. 6. The transposition unit 22 judges according to the notification from the display orientation specification unit 15 whether or not the screen is being used in the portrait orientation (step S11). When the screen is being used in the portrait orientation, the transposition unit 22 copies in the buffer the area included in the display area 42 when the origin of the target image is superposed on the upper left corner of the display area 42 in the portrait orientation (step S12 after YES in step S11). It is assumed that the buffer is in the RAM 112. The display unit 14 displays the inserted image in the blank area 41 in the portrait orientation (step S13). Furthermore, the display unit 14 displays in the display area 42 the image in the area which has been copied to the buffer (step S14). When the screen is being used in the landscape orientation, the processes in steps S12 through S14 are not performed (NO in step S11).

Next, the transposition unit 22 judges according to the notification from the display orientation specification unit 15 whether or not the screen is being used in the landscape orientation (step S15). When the screen is being used in the landscape orientation, the transposition unit 22 copies the area displayed in the display area 42 in the landscape orientation to the buffer when the slide display is performed on the target image (step S16 after YES in step S15). The display unit 14 displays the inserted image in the blank area 41 in the landscape orientation (step S17). Furthermore, the display unit 14 displays in the display area 42 the image in the area copied to the buffer (step S18). When the screen is being used in the portrait orientation, the processes in steps S16 through S18 are not performed (NO in step S15).

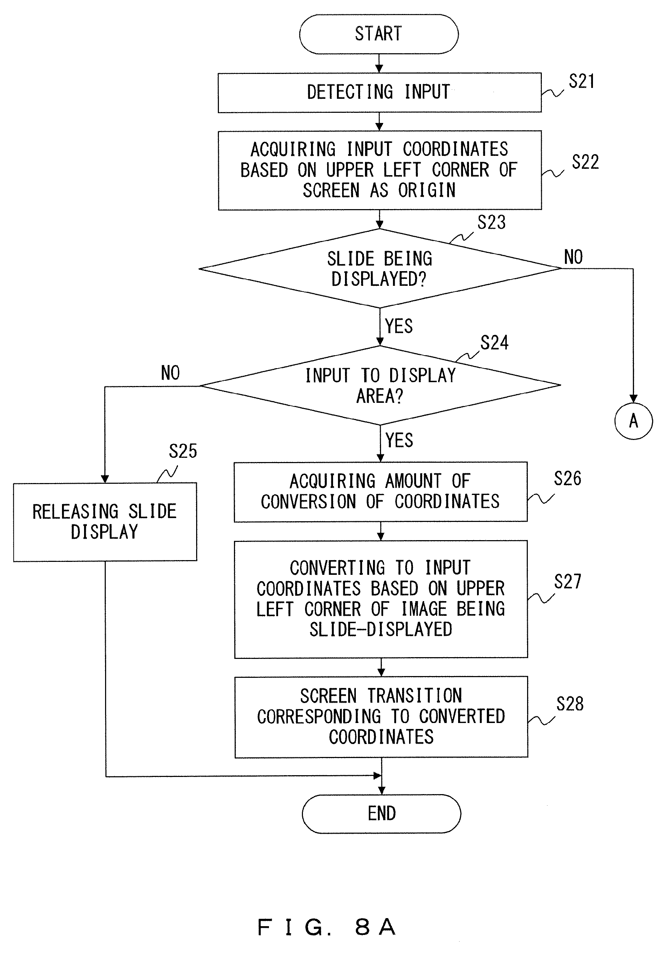

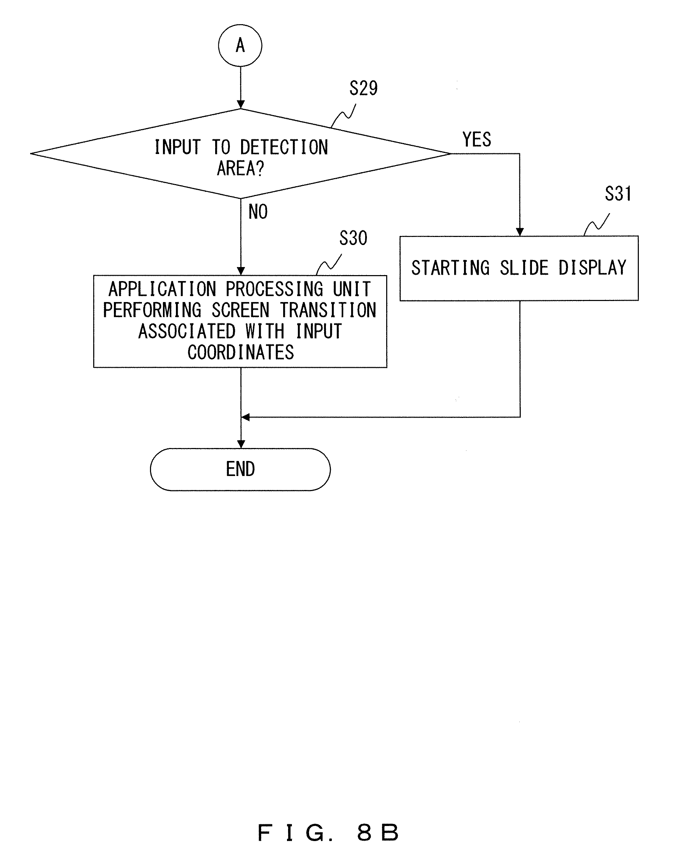

FIGS. 8A and 8B are flowcharts of examples of the processes performed by the display device. FIGS. 8A and 8B are examples of the operation when an input is detected in the display device 10. Upon detection of an input from a user to a touch panel, the input device 12 acquires the input coordinates with the upper left corner defined as the origin of the screen (steps S21 and S22). The input device 12 judges whether or not the slide display is being performed, and if YES, the input coordinates are reported to the detection unit 21 (YES in step S23). If the input coordinates are included in the detection area 40 or the blank area 41, the input is not performed in the display area 42 (NO in step S24). The input to the detection area 40 is detected by the detection unit 21, and the input to the blank area 41 is detected by the transposition unit 22. If the input is detected in the detection area 40 or the blank area 41 during the slide display, the transposition unit 22 releases the slide display in any case (step S25). On the other hand, when an input to the display area 42 is detected, the coordinate conversion unit 23 acquires the amount of conversion of the coordinates to obtain the input position in the target image (step S26 after YES in step S24). The coordinate conversion unit 23 converts the input coordinates into the input coordinates based on the upper left corner of the target image by using the obtained amount of conversion, and outputs the result to the application processing unit 11 (step S27). The application processing unit 11 performs the screen transition associated with the converted and input coordinates (step S28) .

If it is judged in step S23 that the slide display is not being performed, the input device 12 outputs the detected input coordinates to the application processing unit 11 and the detection unit 21. The detection unit 21 judges whether or not the input to the detection area 40 has been detected (step S29) . If the input is not made to the detection area 40, the application processing unit 11 performs the screen transition associated with the coordinates input from the input device 12 (step S30 after NO in step S29). If the input to the detection area 40 is detected when the slide display is not performed, the transposition unit 22 performs the process for the slide display (step S31).

In the description above, the case in which the blank area 41 and the display area 42 are each set as half is exemplified, but the ratio between the blank area 41 and the display area 42 may be arbitrarily changed.

According to the first embodiment, since the origin of the target image may approach the detection area 40 depending on the input from the detection area 40, the display device 10 may move the operator displayed in the area distant from the hand of a user to the area close to the position of the hand of the user. Therefore, the display device 10 may provide an environment in which the user may easily perform an operation. Furthermore, since the display position of the target image slides in the direction of the detection area 40, the relative positions of the operators such as an icon, a button, etc. do not change. Therefore, the user may easily find a target to be operated. Furthermore, in the method according to the first embodiment, since a new icon, etc., is not added to the target image, it is not difficult to view the target image.

### <Second embodiment>

Described below is a display device 50 capable of arbitrarily setting the size of the blank area 41 and the display area 42 in the second embodiment.

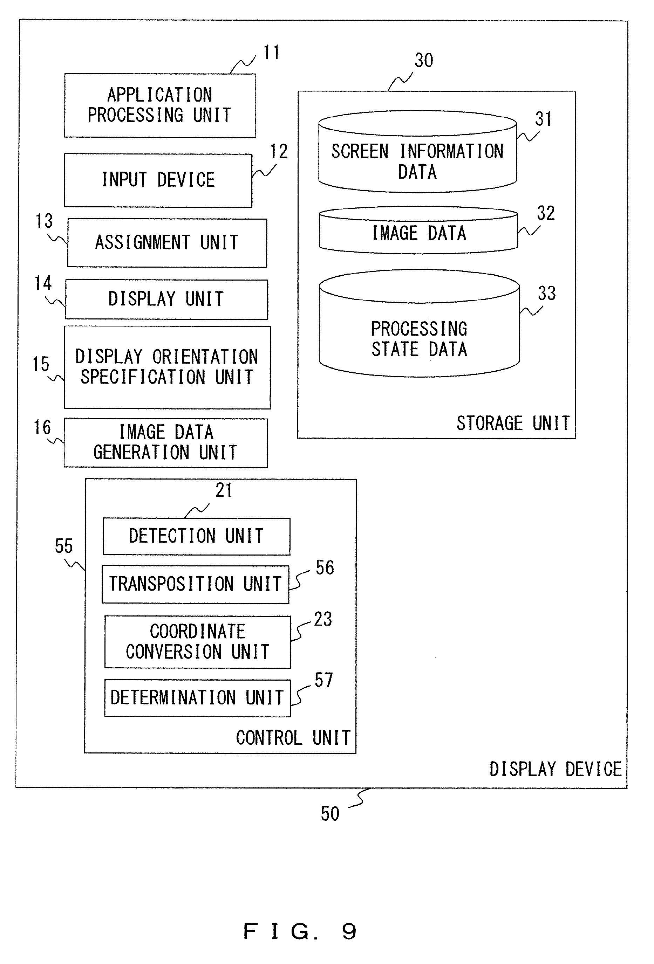

FIG. 9 is a block diagram of an example of the display device 50 according to the second embodiment of the present invention. The display device 50 includes a control unit 55, and further includes the application processing unit 11, the input device 12, the assignment unit 13, the display unit 14, the display orientation specification unit 15, the image data generation unit 16, and the storage unit 30. The control unit 55 includes the detection unit 21, a transposition unit 56, the coordinate conversion unit 23, and a determination unit 57.

In the second embodiment, it is assumed that the input device 12 notifies the detection unit 21 of the type of touch event in addition to the input coordinates. If the detected input is not included in the detection area 40, the detection unit 21 outputs the information reported by the input device 12 to the transposition unit 56 and the coordinate conversion unit 23. In the second embodiment, it is assumed that the transposition unit 56 specifies depending on the type of touch event whether or not the input position has been changed during the touching operation. It is also assumed that the input device 12 may detect a down event, a move event, and an up event as a touch event. When the input coordinates from a user are detected on the touch panel, and the input to the detected coordinates is not included in the locus of the touching operation which has already been observed, the input device 12 judges that a down event has occurred. If an input which is included in the locus of the touching operation which has already been detected but at coordinates different from those at which the down event has occurred is detected, the input device 12 judges that a move event has been detected. Furthermore, if the end of a touching operation is detected on the touch panel, the input device 12 judges that an up event has been detected. Therefore, the input device 12 performs one touching operation as continuous from the detection of a down event to the detection of an up event. In the touching operation accompanied by a change of input coordinates, the touch event changes in the order of a down event, a move event, and an up event. However, in the touching operation not accompanied by a change of input coordinates, the touch event changes in the order of a down event and an up event.

The transposition unit 56 judges whether or not the input position changes when an input from a user is detected in the blank area 41 during the slide display. The transposition unit 56 judges that the adjustment of the size of the display area 42 and the blank area 41 is not requested unless a move event occurs before an up event in the same touching operation after the occurrence of a down event. Then, as in the first embodiment, the transposition unit 56 requests that the display unit 14 terminate the slide display.

On the other hand, the transposition unit 56 judges that a user has requested to adjust the size of the display area 42 and the blank area 41 if a move event occurs before the occurrence of an up event in the same touching operation after the occurrence of a down event. Then, the transposition unit 56 requests that the determination unit 57 determine the size of the blank area 41 when a move event occurs. Furthermore, the transposition unit 56 requests that the input device 12 output to the determination unit 57 the data of the input coordinates and the type of a touch event.

The determination unit 57 obtains the coordinates of the end position of the touching operation when the touching operation is accompanied by the transposition of the input position in the area assigned the same coordinates as the blank area 41 on the screen. The determination unit 57 determines the size of the blank area 41 so that the distance from the side relatively distant from the detection area from among the sides on the screen to the end position may be the length of the longer side of the screen of the blank area 41. In addition, the determination unit 57 defines that the length of the shorter side of the screen of the blank area 41 is equal to the length of the side of the screen. The determination unit 57 may also determine the size of an inserted image so that the distance from the side relatively distant from the detection area from among the sides on the screen to the end position of the touching operation may be the length of the longer side of the screen of the inserted image. In this case, the length of the shorter side of the screen of the inserted image is equal to the length of the side of the screen, and the blank area 41 is adjusted to be the same in size as the inserted image.

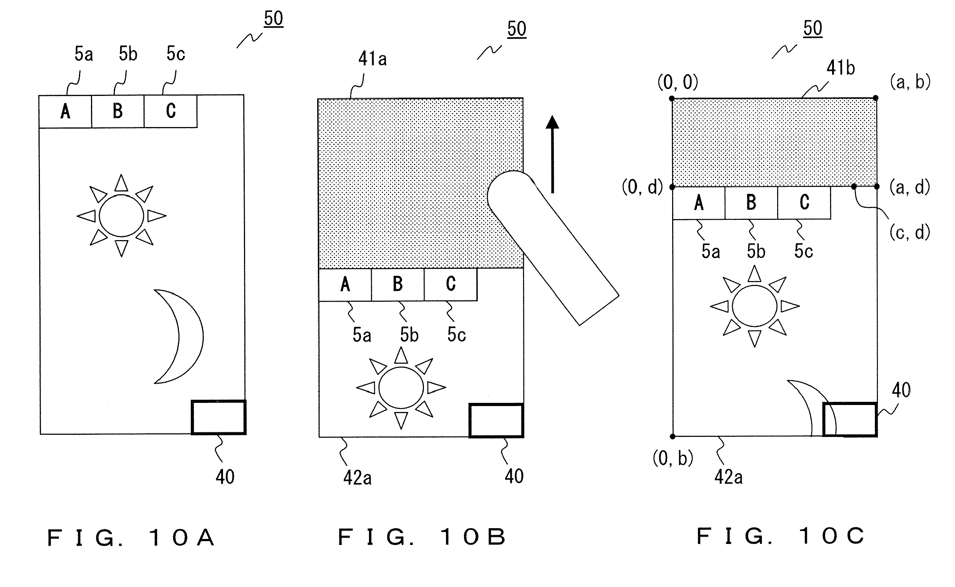

FIGS. 10A through 10C are examples of the method of changing the size of the blank area 41. As illustrated in FIG. 10A, the target image including the icons 5a through 5c is displayed on the display device 50. When the user makes an input to the detection area 40, the display on the display device 50 is changed to the slide display as illustrated in FIGS. 10A and 10B in the procedure explained in the first embodiment. In this example, at the time of FIG. 10B, the sizes of a blank area 41a and a display area 42a are set based on the coordinate data (T1 and SC2 in FIG. 4) held by the display device 50 in advance.

Next, assume that a user has performed the touching operation on the area in which the blank area 41a is displayed on the screen. In this case, the input device 12 detects the touching operation on the area assigned the same coordinates as the blank area 41a on the touch panel. The input device 12 notifies the transposition unit 56 of the occurrence of a down event indicating the start of a touching operation and the coordinates of the point where the input is made.

When a change in an input position in the touching operation of a user occurs, the transposition unit 56 requests that the determination unit 57 determine the size of the blank area 41. Furthermore, the transposition unit 56 requests that the input device 12 input a touch event and input coordinates to the determination unit 57. The input device 12 notifies the determination unit 57 of the type of touch event and the input position at the request from the transposition unit 56. The determination unit 57 monitors the change in the input coordinates until the touch event refers to an up event, and acquires the input coordinates when the up event occurs. For example, assume that the coordinates when the up event occurs are (c, d). The position where the up event has occurred is illustrated in FIG. 10C.

The determination unit 57 acquires the display orientation from the display orientation specification unit 15. In the portrait orientation, since the detection area 40 is set at the lower part of the screen, the side relatively distant from the detection area 40 is a short side at the upper part of the screen. Therefore, the determination unit 57 judges that the height of the blank area 41 has been adjusted. The determination unit 57 defines the distance from the short side at the upper part of the screen to the position where the up event has occurred as the height of a newly set blank area 41b. In this example, since the Y coordinate of the position where the up event has occurred is d, the determination unit 57 determines the blank area 41b as illustrated in FIG. 10C.

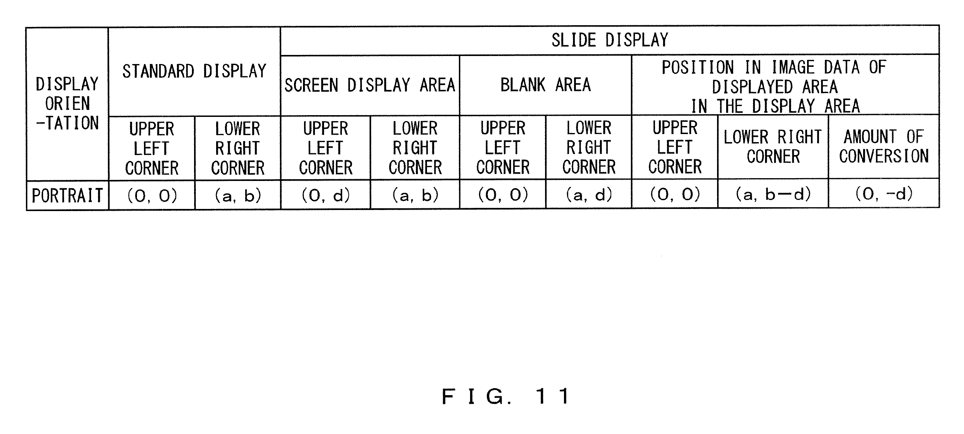

When the determination unit 57 determines the size of the blank area 41b, it also determines the coordinates for specification of the area of a blank area 41b and the area of a display area 42b. FIG. 11 is an example of the coordinates for specification of the areas of the blank area 41b and the display area 42b. The determination unit 57 notifies the transposition unit 56 of the information about the obtained coordinates. Upon receipt of the notification of the coordinates of the blank area 41b, the transposition unit 56 requests that the display unit 14 display an inserted image in the blank area 41b and a target image in the display area 42b. Furthermore, the transposition unit 56 may store the notified information about the coordinates as the screen information data 31.

Concurrently with the change in the display on the display unit 14, the transposition unit 56 notifies the coordinate conversion unit 23 of the coordinates of the upper left corner of the display area 42b. In a process similar to the process in the first embodiment, the coordinate conversion unit 23 specifies which part in the image data 32 of the target image corresponds to the area displayed in the display area 42b. An example of the information about the position in the target image of the area displayed in the display area 42b is illustrated on the right of the table in FIG. 11. Furthermore, the coordinate conversion unit 23 also calculates and stores the amount of conversion for converting the coordinates whose input has been observed to the input position on the target image. In this example, d is subtracted from the value of the Y coordinate of the input coordinates, and the value of the X coordinate is unchanged, thereby obtaining the input position in the target image.

The operation of the display device 50 when a user makes an input to the area set in the detection area 40 or the display area 42b in the touch panel is similar to the operation in the first embodiment. On the other hand, when an input to the same coordinates as the blank area 41b is observed, the size of the blank area 41 is readjusted or the slide display is released.

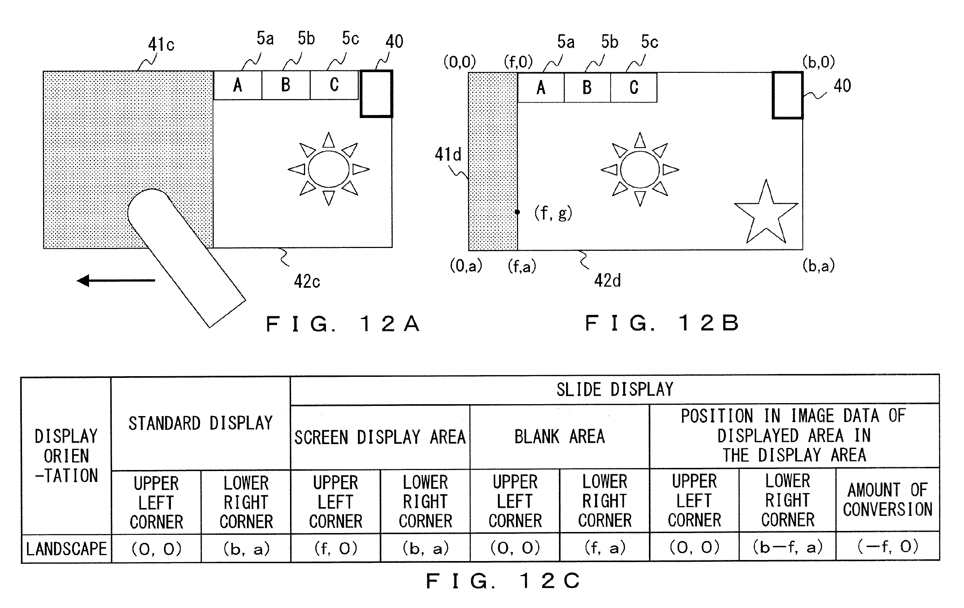

FIGS. 12A through 12C are examples of the method of changing the size of a blank area when the screen is being used in the landscape orientation. Also, when the screen is being used in the landscape orientation, the sizes of the blank area 41 and the display area 42 may be adjusted as in the case in which the screen is being used in the portrait orientation. When the slide display is performed by the procedure explained in the first embodiment, an inserted image is displayed in a blank area 41c as illustrated in FIG. 12A, and part of the target image is displayed in a display area 42c. When a user performs a touching operation accompanied by the transposition of the coordinates in the blank area 41c, the determination unit 57 specifies the coordinates of the end position of the touching operation as explained with reference to FIGS. 10A through 10C. In the example in FIG. 12B, it is assumed that the coordinates of the end position of the touching operation are (f, g).

As illustrated in FIG. 12B, when the detection area 40 is set on the right in the landscape orientation, the side relatively distant from the detection area 40 is the short side on the left of the screen. Therefore, since the value of the X coordinate of the end position of the touching operation is f, the maximum value of the X coordinate of a blank area 41d is set to f. That is, the determination unit 57 sets the blank area 41d and a display area 42d in the landscape orientation as illustrated in FIG. 12B. Furthermore, the determination unit 57 determines the coordinates for specification of the areas of the blank area 41d and the display area 42d as illustrated in FIG. 12C, and notifies the transposition unit 56 of the coordinates. Since the transposition unit 56 requests that the display unit 14 display an inserted image in the blank area 41b and display a target image in the display area 42b, the display of the screen of the display device 50 is performed as illustrated in FIG. 12B.

Furthermore, the coordinate conversion unit 23 specifies to which part in the image data 32 of the target image the area displayed in the display area 42b corresponds in a process similar to the process in the first embodiment. FIG. 12C illustrates the result calculated by the coordinate conversion unit 23. In this example, f is subtracted from the value of the X coordinate of the input coordinates, and the value of the Y coordinate is not changed, thereby obtaining the input position in the target image.

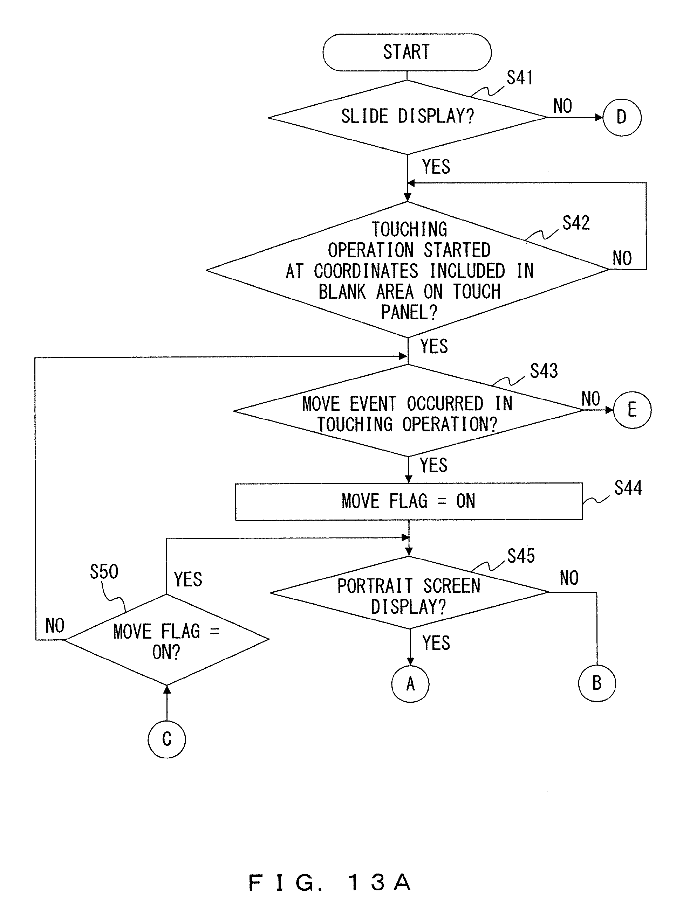

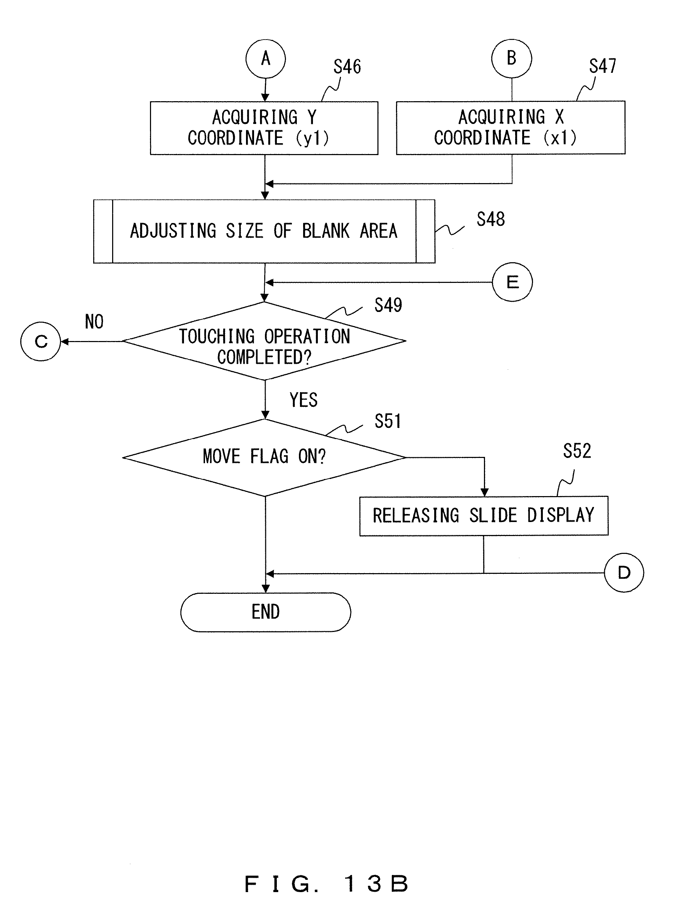

FIGS. 13A and 13B are flowcharts of examples of the process of changing the size of the blank area 41. In the processes in FIGS. 13A and 13B, it is assumed that the size of the blank area 41 is set each time a move event is reported to the determination unit 57, and the display of the display unit 14 is updated. Therefore, when the processes illustrated in FIGS. 13A and 13B are performed, the user may adjust the blank area 41 while confirming the range of the target image displayed in the display area 42. It is assumed that the transposition unit 56 stores a move flag. The move flag = ON indicates that the move event has been observed, and when the move flag is not set to the ON position, this indicates that the move event has not been observed.

The transposition unit 56 judges whether or not the slide display is being performed (step S41). If the slide display is not being performed, the process of changing the size of the blank area 41 is terminated (NO in step S41). If the slide display is being performed, the transposition unit 56 waits for the start of the touching operation at the coordinates included in the blank area 41 on the touch panel (step S42).

The transposition unit 56 judges whether or not a move event has occurred in the touching operation (step S43). When a move event occurs, the transposition unit 56 sets a move flag in the ON position, and requests that the determination unit 57 adjust the blank area 41 (step S44 after YES in step S43). The determination unit 57 judges whether or not the display orientation of the screen is the portrait orientation (step S45). When the display orientation of the screen is the portrait orientation, the determination unit 57 acquires the value (y1) of the Y coordinate of the position input from the input device 12 with the move event (step S46 after YES in step S45). When the display orientation of the screen is the landscape orientation, the determination unit 57 acquires the value (x1) of the X coordinate of the position input from the input device 12 with the move event (step S47 after NO in step S45). Then, by the determination unit 57 notifying the transposition unit 56 of the result of adjusting the size of the blank area 41 and the size of the display area 42, the screen display is performed using the blank area 41 and the display area 42 after the change (step S48). The transposition unit 56 judges whether or not the touching operation has been completed (step S49). On the other hand, if it is judged in step S43 that a move event has not occurred in the touching operation, the judgment in step S49 is performed without performing the processes in steps S44 through S48.

When the touching operation is not completed, the transposition unit 56 judges whether or not a move flag is set in the ON position (step S50 after NO in step S49). When the move flag is set in the ON position, the processes in and after step S45 are repeated (YES in step S50). When the move flag is not set in the ON position, the processes in and after step S43 are repeated (NO in step S50).

When the touching operation is completed, the transposition unit 56 judges whether or not the move flag is set in the ON position (step S51 after YES in step S49). When the move flag is set in the ON position, the transposition unit 56 sets the move flag in the OFF position, thereby terminating the process

(YES step S51). When the move flag is not set in the ON position, the transposition unit 56 judges that the user has requested that the slide display be released, and releases the slide display (step S52 after NO in step S51).

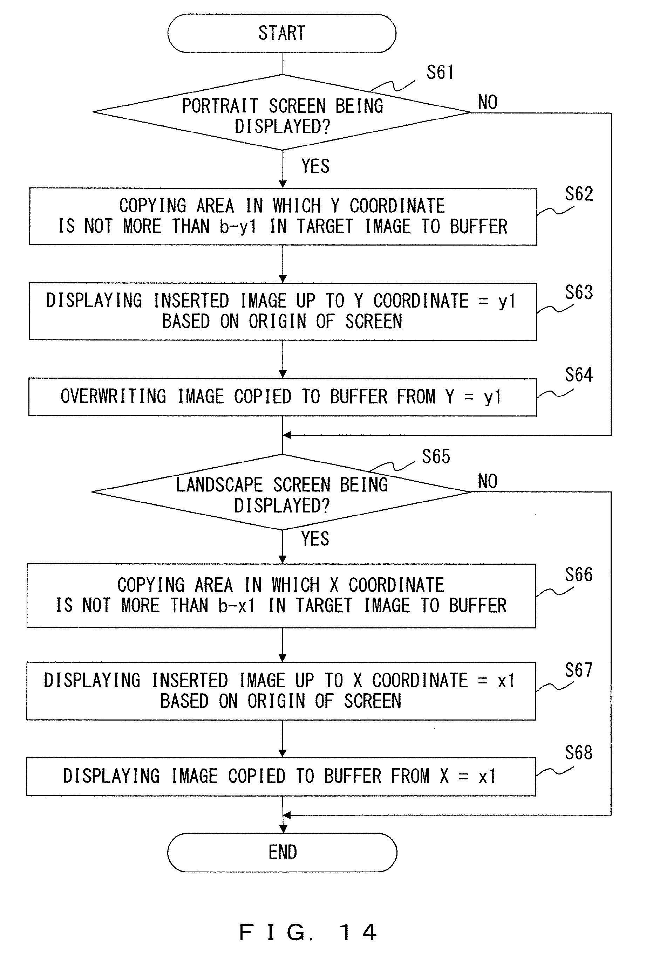

FIG. 14 is a flowchart of an example of the process of changing the size of a blank area 41. FIG. 14 illustrates in detail the process performed in step S48 in FIG. 13B. The transposition unit 56 accesses the display orientation specification unit 15 and judges whether or not the screen is being used in the portrait orientation (step S61). When the screen is being used in the portrait orientation, the transposition unit 56 copies the area in which the value of the Y coordinate is 0 through b-y1 to the buffer (step S62 after YES in step S61). The display unit 14 displays the image of the area copied to the buffer in the area in which the Y coordinate is not less than y1 (step S14). When the screen is displayed in the landscape orientation, the processes in steps S62 through S64 are not performed (NO in step S61).

Next, the transposition unit 56 judges whether or not the screen is being used in the landscape orientation according to the notification from the display orientation specification unit 15 (step S65). When the screen is being used in the landscape orientation, the transposition unit 56 copies the area in which the value of the X coordinate is 0 through b-x1 in the target image (step S6 after YES in step S65). The display unit 14 displays an inserted image in the area in which the value of the X coordinate is 0 through x1 based on the origin of the screen (step S67). Furthermore, the display unit 14 displays the image of the area copied to the buffer in the area in which the X coordinate is not less than x1 in the display area 42 (step S68). When the screen is being used in the portrait orientation, the processes in steps S66 through S68 are not performed (NO in step S65).

According to the second embodiment, a user may adjust the sizes of the blank area 41 and the display area 42. Therefore, for example, the display area of the target screen may be held at the wide end and the display position such as the icon 5 may be moved to a range accessible by the hand of the user. When the user has a small hand like a child, the display position of the icon 5 etc. may be set in a position closer to the detection area 40. Therefore, the display device 50 may be easily operated by the user. Furthermore, in the second embodiment, as in the first embodiment, the relative position of an operator is not changed, the user may easily find an operation target. In addition, since a new icon etc. is not added on the target image, the target image may be prevented from being viewed.

### <Third embodiment>

In the third embodiment, the operation of the display device 10 when the slide display is performed along with the screen orientation when the screen orientation is changed during the slide display is explained.

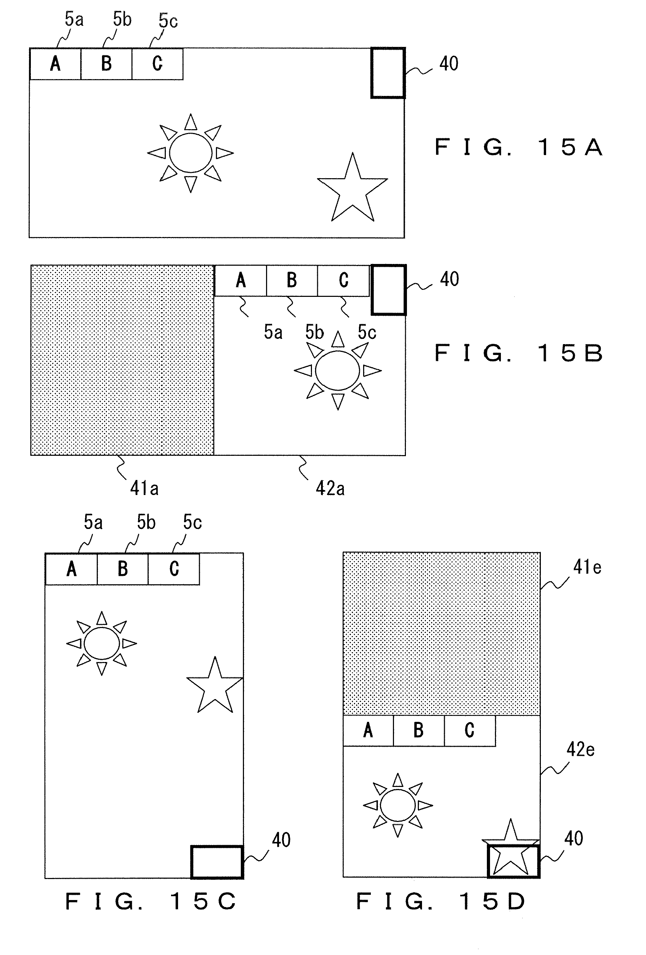

FIG. 15A is an example of a screen display in the landscape orientation before setting the slide display. In the example of FIG. 15A, it is assumed that image data 32a is displayed on the screen. When an input to the detection area 40 is detected, the display of the screen is changed as illustrated in FIGS. 15A and 15B, and part of the image data 32a is displayed in the display area 42a.

Assume that the user is holding the display device 10 by another hand so that the screen orientation may be the portrait orientation during the slide display as illustrated in FIG. 15B. Then, the display orientation specification unit 15 detects that the display orientation of the display device 10 has been changed, and notifies the transposition unit 22 and the image data generation unit 16 of the change in the screen orientation. The transposition unit 22 temporarily stops the slide display, and sets the value of the suspend flag to 1. In this case, it is assumed that the suspend flag is used in specifying whether or not the slide display has been suspended, and is held by the transposition unit 22. When the suspend flag = 0, the slide display is not suspended by changing the screen orientation. When the suspend flag = 1, this indicates that the slide display has been suspended by changing the screen orientation.

Upon receipt of a notification that the screen orientation has been changed, a new target image is generated again at the changed screen orientation. Assume that the data of the target image newly generated by the image data generation unit 16 is image data 32b. For the image data 32b, the positions of the icons 5a through 5c, the arrangement of the image to be displayed, etc. are adjusted as illustrated in FIG. 15C.

Since the suspend flag = 1, the transposition unit 22 requests again that the display unit 14 perform the slide display when new image data 32b is generated. In this case, the transposition unit 22 requests that the display unit 14 display an inserted image in a blank area 41e in the portrait orientation, and the image data 32b in a display area 42e as illustrated in Fig 15D. When the slide display is performed by the display unit 14, the transposition unit 22 sets the suspend flag = 0.

The description above exemplifies the case in which the screen orientation is changed during the slide display in the landscape orientation. However, the process is performed similarly when the screen orientation is changed during the slide display in the portrait orientation. Similarly, in the display device 50, the orientation of the slide display may be switched on the screen depending on the change in the screen orientation.

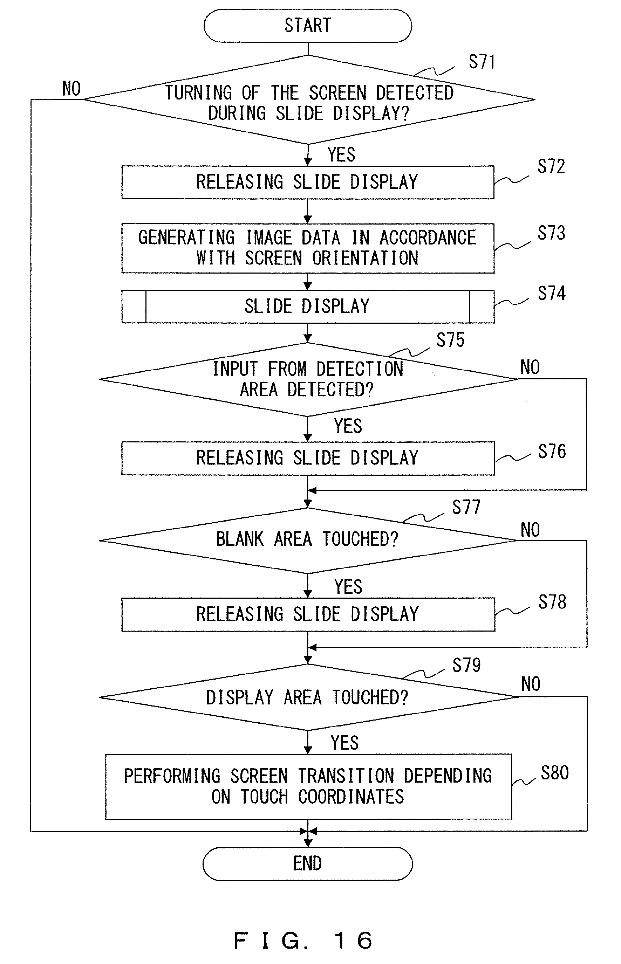

FIG. 16 is a flowchart of an example of the process performed according to the third embodiment. FIG. 22 judges whether or not the turning of the screen has been detected during the slide display (step S71). When the turning of the screen is detected during the slide display, the transposition unit 22 sets the suspend flag = 1, and releases the slide display (step S72 after YES in step S71). The image data generation unit 16 generates new image data 32 based on the screen orientation (step S73).

The transposition unit 22 performs the process for the slide display using the newly generated image data 32 (step S74). The process for the slide display is explained above with reference to FIG. 7. The processes in steps S75 through S80 are similar to those explained in steps S3 through S8 with reference to FIG. 6. If it is judged in step S71 that the turning of the screen has not been detected during the slide display, the transposition unit 22 terminates the process (NO in step S71) .

In the third embodiment, the display device 10 or the display device 50 autonomously changes the display orientation. Therefore, even if the screen orientation is changed before inputting data to the display area 42 etc. after the slide display, an operator such as the icon 5 etc. is displayed in the area easily accessible by the hand of a user. Therefore, the display device 10 and the display device 50 can be easily operated.

As described above, the display device according to the embodiments of the present invention improves the operability.

### <Others>

The present invention is not limited to the above-mentioned embodiment, but may be realized in many variations. Described below are some examples.

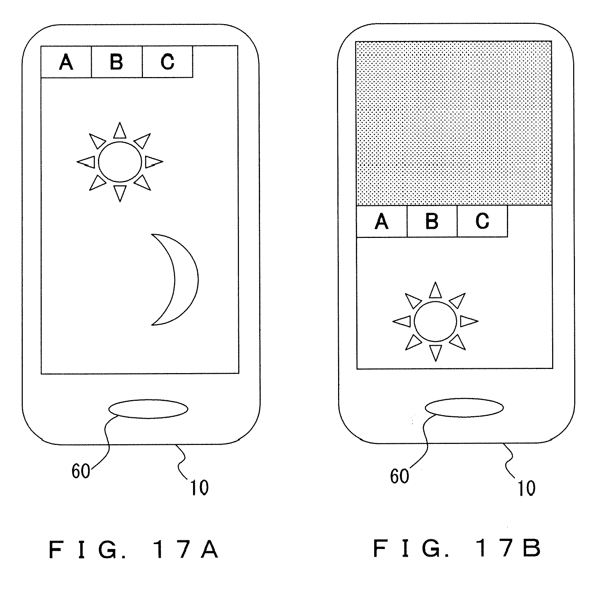

FIGS. 17A and 17B are variation examples of a display device. It is not required that the entire surface on which the screen is attached function as a screen, and a hard key 60 may be provided on the surface where the screen is attached as illustrated in FIG. 17A. The assignment unit 13 may include the hard key 60 in the detection area 40. When the hard key 60 is included in the detection area 40, a user may change from the display illustrated in FIG. 17A to the slide display illustrated in FIG. 17B by pressing the hard key 60. Furthermore, it is assumed that the slide display illustrated in FIG. 17B may be released by pressing the hard key 60. As with the display device 10, the display device 50 may also be the device where the hard key 60 is provided on the same surface as the screen.

In the description above, the sliding of the display position of the image generated in the process by an application is exemplified, but a target image may include an operator displayed by the operating system (OS) of the display devices 10 and 50. For example, an image displayed by the OS for notifying a user of the state of the display devices 10 and 50, an icon indicating by the OS the area for recognition of an input from a user as a substitute of a hard key, etc. may be included in a target image. The image, the icon, etc. displayed by the OS may be moved with an image displayed by an application, thereby providing an environment in which a user may easily perform an operation.

In the explanation above, the case in which the display position of an image is shifted is exemplified, but a variation may be devised by generating again an image to be displayed by the image data generation unit 16. In this case, the transposition unit 22 notifies the image data generation unit 16 of the display area 42 after the sliding, and the display unit 14 displays the image data generated by the image data generation unit 16 in the display area 42.

In the second embodiment, the determination unit 57 may be set to adjust the sizes of the blank area 41 and the display area 42 in both the portrait and landscape orientations regardless of the use of the screen orientation. In this case, the transposition unit 56 stores the coordinates reported by the determination unit 57 as the screen information data 31. Therefore, when combined with the third embodiment, a user may adjust the size of the blank area 41, thereby using the size of the blank area 41 after the change even when the orientation of the screen is changed.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. A display device, comprising:
a display unit (14) including a screen;
an input device (12) configured to accept an input from a user;
an assignment unit (13) configured to assign a part of the input device to a detection area (40) which detects a request for a change in a display position of an image on the screen;
a detection unit (21) configured to detect the input from the detection area;
a transposition unit (22, 56) configured to, when the input from the detection area is detected when a first image is displayed on the screen, display on the display unit a second image obtained by moving the display position of the first image so that a target area (5a-5c) may approach the detection area (40), wherein
the first image includes the target area (5a-5c) as an area selectable by the user as a process target.

2. The display device according to claim 1, further comprising
a determination unit (57) configured to determine a display position of the first image;
the input device (12) includes a touch panel used in performing an input at a position on the screen;
the second image includes at least a part of the first image and an inserted image to be inserted to shift a start-of-display position of the first image;
the transposition unit (56) is configured to judge, when a touching operation on the touch panel occurs in an area where the inserted image is displayed when the second image is displayed on the screen, whether or not a position input by the touching operation is changed; and
the determination unit (57) is configured to change a size of the inserted image using a locus of the touching operation when the position is changed.

3. The display device according to claim 2, wherein:
the determination unit (57)
is configured to specify an end position of the touching operation when the position is changed; and
is further configured to determine a size of the inserted image so that a distance from a first side of the screen to the end position may be a length of the inserted image in the direction of a longer side of the screen wherein
the first side is relatively distant from the detection area from among sides of the screen.

4. The display device according to claim 2 or 3, wherein the transposition unit (56)
is configured to judge that the user has requested to return to the display position of the first image when the position input by the touching operation is not changed; and
is further configured to instruct the display unit (14) to display the first image instead of the second image.

5. The display device according to any preceding claim, further comprising:
an orientation specification unit (15) configured to specify a display orientation on the screen; and
a generation unit (16) configured to generate image data to be displayed on the screen, wherein
the generation unit (16) is further configured to generate a third image obtained by changing a layout of the first image by alignment to a changed display orientation when the display orientation of the screen is changed while displaying the second image; and
the transposition unit (56) is configured to instruct the display unit to display a fourth image obtained by moving the display position of the third image so that the target area may approach the detection area.

6. The display device according to any preceding claim, wherein
the transposition unit (22, 56)
is configured to judge that the user has requested to return to the display position of the first image when an input is detected from the detection area (40) while displaying the second image; and
is further configured to instruct the display unit (14) to display the first image instead of the second image.

7. A display control method for causing a display device (10, 50) including a screen and an input device (12) to perform the process of:
assigning a part of the input device to a detection area (40) which detects a request for a change in a display position of an image on the screen;
detecting (S1) the input from the detection area;
when the input from the detection area is detected when a first image is displayed on the screen, displaying (S2) on the display device a second image obtained by moving the display position of the first image so that a target area may approach the detection area wherein
the first image includes the target area as an area selectable by the user as a process target.

8. The method according to claim 7, wherein
the input device (12) includes a touch panel used in performing an input at a position on the screen;
the second image includes at least a part of the first image and an inserted image to be inserted to shift a start-of-display position of the first image;
the process further comprises:
judging (S43), when a touching operation on the touch panel occurs in an area where the inserted image is displayed when the second image is displayed on the screen, whether or not a position input by the touching operation is changed; and
changing a size of the inserted image using a locus of the touching operation when the position is changed.

9. The method according to claim 8, wherein
the process further comprises:
specifying (S46, S47) an end position of the touching operation when the position is changed; and
determining a size of the inserted image so that a distance from a first side of the screen to the end position may be a length of the inserted image in the direction of a longer side of the screen wherein,
the first side is relatively distant from the detection area from among sides of the screen.

10. The method according to claim 8 or 9, wherein
the process further comprises:
judging (S51) that the user has requested to return to the display position of the first image when the position input by the touching operation is not changed; and
displaying (S52) the first image instead of the second image.

11. The method according to any of claims 7 to 10, wherein the process further comprises:
specifying a display orientation on the screen;
generating (S71, S73) a third image obtained by changing a layout of the first image by alignment to a changed display orientation when the display orientation of the screen is changed while displaying the second image; and
instructing (S74) the display unit to display a fourth image obtained by moving the display position of the third image so that the target area may approach the detection area.

12. The method according to any of claims 7 to 11, wherein the process further comprises:
judging (S3) that the user has requested to return to the display position of the first image when an input is detected from the detection area while displaying the second image; and
instructing (S4) the display unit to display the first image instead of the second image.

13. A display control program for causing a display device (10, 50) including a screen and an input device (12) to perform the process of:
assigning a part of the input device to a detection area (40) which detects a request for a change in a display position of an image on the screen;
detecting (S1) the input from the detection area;
when the input from the detection area is detected when a first image is displayed on the screen, displaying (S2) on the display device a second image obtained by moving the display position of the first image so that a target area may approach the detection area wherein
the first image includes the target area as an area selectable by the user as a process target.
